(19) **Europäisches Patentamt**
**European Patent Office**
**Office européen des brevets**

(11) **EP 0 757 271 B1**

(12) **EUROPEAN PATENT SPECIFICATION**

(45) Date of publication and mention
of the grant of the patent:
**11.12.2002 Bulletin 2002/50**

(51) Int Cl.$^7$: **G02B 21/00**

(21) Application number: **96305666.8**

(22) Date of filing: **31.07.1996**

(54) **Interferometric near-field apparatus and method**

Interferometrischer Nahfeldapparat und Verfahren

Appareil interférométrique à champ proche et procédé

(84) Designated Contracting States:
**DE FR GB**

(30) Priority: **04.08.1995 US 511169**
**04.08.1995 US 511166**
**04.08.1995 US 511579**

(43) Date of publication of application:
**05.02.1997 Bulletin 1997/06**

(73) Proprietor: **International Business Machines
Corporation
Armonk, N.Y. 10504 (US)**

(72) Inventors:
• **Wickramasinghe, Hemantha Kumar
Chappaqua, New York 10514 (US)**
• **Zenhausern, Frederic
Mohegan Lake, New York 10547 (US)**
• **Martin, Yves
Ossining, New York 10562 (US)**
• **O'Boyle, Martin Patrick
Peekskill, New York 10566 (US)**

(74) Representative: **Litherland, David Peter
IBM United Kingdom Limited
Intellectual Property Department
Hursley Park
Winchester, Hampshire SO21 2JN (GB)**

(56) References cited:
**US-A- 4 947 034**

• **APPLIED PHYSICS LETTERS, vol. 65, no. 13, 26
September 1994, pages 1623-1625,
XP000470295 ZENHAUSERN F ET AL:
"APERTURELESS NEAR-FIELD OPTICAL
MICROSCOPE"**
• **MATERIALS RESEARCH SOCIETY SYMPOSIUM
PROCEEDINGS: DETERMINING NANOSCALE
PHYSICAL PROPERTIES OF MATERIALS BY
MICROSCOPY AND SPECTROSCOPY, vol. 332,
29 November 1993 - 3 December 1993, pages
437-447, XP000672009 VAEZ-IRVANI ET AL:
"POLARIZATION, INTERFERENCE CONTRAST,
AND PHOTOLUMINESCENCE IMAGING IN NEAR
FIELD OPTICAL MICROSCOPY"**
• **PURE AND APPLIED OPTICS, vol. 3, no. 5, 1994,
pages 867-877, XP000672011 TOTZECK M:
"NEAR-FIELD IMAGING WITH A WAVEGUIDE
RESONATOR PROBE IN COLLECTION AND
REFLECTION MODE: I. MICROWAVE
MEASUREMENTS AND RESOLVING POWER"**
• **SCIENCE, vol. 269, no. 5227, 25 August 1995,
pages 1083-1085, XP000673483 ZENHAUSERN F
ET AL: "SCANNING INTERFEROMETRIC
APERTURELESS MICROSCOPY: OPTICAL
IMAGING AT 10 ANGSTROM RESOLUTION"**

## EP 0 757 271 B1

**Description**

This invention relates to an apparatus and method for deriving physical properties of a workpiece and also for imaging and detecting the presence of a workpiece.

As used in this application, the phrase "a workpiece" means preferably, materials that may be variously characterized as organic compounds, conductors, semiconductors, insulators, ferromagnetics, paramagnetics, diamagnetics or composites thereof.

It is known that there can be many different kinds of interaction between electromagnetic radiation and a workpiece. For example, some common interactions include refraction, reflection or absorption. For a specific workpiece, these phenomena are usually described quantitatively in terms of phenomenological parameters empirically assigned to the workpiece: e.g., index of refraction, and absorption index.

Further, by considering the properties of electromagnetic waves, one can, for example, correlate the index of refraction with the possibility of polarizing a material (i.e., separating positive and negative charges) as expressed by a dielectric constant of the workpiece; magnetize a workpiece (i.e., line up magnetic dipoles) as expressed by the permeability of the workpiece; or, correlate a particular kind of optical absorption with the electrical conductivity of the workpiece. In sum, accordingly, by the phrase "determining physical properties of a workpiece", we reference methods and instrumentation suitable for determining phenomenological properties of a workpiece including, inter alia, polarization, magnetic or dielectric susceptibility, or dielectric constant of the workpiece.

Accordingly, as used in the present application, the phrase "determining physical properties of a workpiece" refers to methods and instrumentation suitable for determining phenomenological properties of a workpiece including, inter alia, polarization, magnetic or dielectric susceptibility, or dielectric constant of the workpiece.

Furthermore, as used in the present application the phrase "detecting the presence of a workpiece" refers to methods and instrumentation for determining the phenomenological presence of a workpiece including, but not limited to a figure or image of the workpiece by measuring a re-radiation of at least part of a workpiece when it is interrogated by an incident electromagnetic wavepacket.

Classical analytical techniques suitable for determining physical properties of a workpiece, even at the molecular level, are known, and include e.g., scanning microscopies, acoustic imaging, x-ray analysis or electron imaging. Implicit in these known classical techniques, however, are several subsumed measurement assumptions or requirements: for example, that an average measurement is based on a workpiece that comprises an initial mass of at least several molecules; or, a measurement, particularly in obtaining optical information, is delimited in the sense that the resolution capabilities of classical optical techniques i.e., confocal, fluorescent and polarized light microscopies, are diffraction limited and the sensitivity can not reach single atom detection.

Most of these analytical techniques, in particular, Near Field Scanning Optical Microscopy, NSOM, are based on fluorescence detection, whose signal detection may be limited by a molecular detection efficiency corresponding to the fraction of molecules in the sample that can actually be detected.

There are several important limitations on the magnitude of a signal that can ultimately be obtained from a single-molecule. A finite fluorescence lifetime and photobleaching, combined with typical photon detection efficiency, yield typically a maximum of a few thousand detectable fluorescent photons. Molecular detection probabilities (and concentration detection limits) are strongly influenced by the background (for example, Raman and Raleigh scattering from contaminants or solvents, laser intensity inhomogeneity...) and signal photocount amplitude probability distributions, as well as the average S/N. The response to one or several molecules in a given probe volume is clearly highly dependent on photocount statistics, just as the molecular detection efficiency. Complications such as excitation laser noise, molecular diffusion and other processes (e.g., incomplete photobleaching) can also obscure a distinction between one or two molecules.

In current experimental setups, the instrument components are chosen to minimize the background signals (for example, small illumination volume) and to maximize the light collection efficiency (for example, high numerical aperture objectives). Typically, the best current NSOM configurations allow a spatial location of $\lambda/10$, limiting efficient discrimination among different molecules.

The last decade has seen relevant applications in modern imaging techniques mainly due to improvements in optics, instrumentation and contrast enhancement techniques. For example, the ability to scan probes across a workpiece surface with very high spatial resolution and to exploit, for example, some quantum mechanics of their interactions has provided new electronic, magnetic and optical microscopies. There has been a rapid growth in microscale imaging, spectroscopic measurements to the nanometric scale, and microfabrication. Scanning probe microscopy is increasingly being applied in materials science, chemical and biological surface applications, due to its nondestructive nature, and capabilities for use in fluids. Typical examples of scanning probe microscopes include Scanning Tunneling Microscopes (STM), Atomic Force Microscopes (AFM) and all derivatives, for example, the Magnetic Force Microscope (MFM) or the Thermal Probe Microscope.

More recently, advances in the optics of nanometer dimensions have occurred, particularly with increasing

2

emphasis on scanning near-field optical microscopy (NSOM). Typically, the influence of a local probe near an interface can result in variations of the distribution of electromagnetic fields. There are various configurations (reflection and transmission modes) of these near-field sensing techniques, exploiting radiation effects based on far-field detection of optical interactions between probe and workpiece.

Among various NSOM optical sensors, spherical particles, and pointed tips may be used to perturb an incident radiation, e.g., an evanescent wave. The probe sensor can create a field distribution which may be detected in the far-field, carrying information on the near-field zone surrounding the probe source and characteristic of its optical properties. In many of the experimental NSOM setups, an optical scanning sensor incorporates a small aperture (see description of aperture-based system as NSOM probes in U.S. Patent Nos. 4,917,462; 5,272,330) from which a local excitation electric field distribution can emerge for transversally illuminating the workpiece. As a result, near-field distortions due to the interaction between the aperture acting as a weak light source ( e.g., low efficiency of about 50 nW for 80 nm aperture) and the workpiece are similarly detected in the far-field by measuring the intensity only of the radiation (i.e., the square of the electric field in place of a direct measurement of the electric field as described in the present invention) with the use of a photon counter device.

Although some prior art detection techniques can interrogate particles individually they cannot detect every workpiece in an environment (i.e., sample or enclosed volume). There is an increasing demand for a new method capable of detecting single micro or even nanoparticles or achieving single molecule mass detection.

According to a first aspect of the invention there is provided an apparatus for providing near-field measurements of a workpiece, said apparatus comprising: a source of electromagnetic radiation for generating an incident wave; means for directing at least a portion of the incident wave to the workpiece; a probe tip acting as an antenna for receiving the incident wave and re-radiating a signal wave; means for creating an interference signal based on the signal wave and a reference wave; and a detector for interrogating at least one of the phase and amplitude of the interference signal, characterised in that the apparatus further comprises: means for positioning at least one of the probe tip and the workpiece in such close proximity as to develop a multi-pole coupling interaction whereby the scattered electric field strength of the signal wave is increased.

According to a second aspect of the invention there is provided a method for detecting the presence of a workpiece, the method comprising the steps of: sampling an electromagnetic wave packet representative of workpiece properties and comprising encoded wave information; decoding said electromagnetic wave packet by interrogating at least one of its phase and amplitude information using an interference reference wave; and using said decoding information as a means for detecting the presence of said workpiece, characterised in that the encoded wave information is derived from a multi-pole interactive coupling between a probe and the workpiece.

According to a third aspect of the invention there is provided a method for deriving physical properties of a workpiece, the method comprising the steps of: sampling an electromagnetic wave packet representative of workpiece properties and comprising encoded wave information; decoding said electromagnetic wave packet by interrogating at least one of its phase and amplitude information using an interference reference wave; and correlating this information to referent physical-chemical properties of the workpiece; characterised in that the encoded wave information is derived from a multi-pole interactive coupling between a probe and the workpiece.

Accordingly, the present invention can provide a significant extension in spatial resolution to at least $\lambda/500$ and even down to the atomic level, thereby providing an ability for lower concentration detection limits, for example, below the femtomolar level. In addition to being highly sensitive, the present interferometric imaging/sampling method, based on sensing a multi-pole coupling between a probe and a workpiece through amplitude and/or phase detection, permits one to process complex susceptibility measurements or the complete excitation spectrum of a single-molecule. In particular, a coupling interaction comprises a complex function including a resistive or imaginary component and a reactive or real component (inductive or capacitive) that can be measured down to the atomic level. Moreover, a unique ability of excitation spectroscopy combined with background minimization, through interferometric coherent detection can overcome several intrinsic limitations of fluorescent based techniques for single-molecular detection.

The present invention also provides the ability for more senstive detection limits, for example down to single particle or single molecule level.

As is described in greater detail below the preferred embodiment of the invention is a method in which an electromagnetic radiation interaction between a probe dipole and a workpiece dipole externally driven by an incident field, e.g., an evanescent or propagating or standing field, can be detected by interferometrically measuring amplitude and phase differences between a reflected wave and a reference wave component. The dipole-dipole coupling mechanism comprises a main source of contrast generation, and the near field interferometric detection of the scattered optical power can achieve ultimate S/N and resolution due to a $(ka)^3$ signal dependence, rather than $(ka)^6$ in conventional NSOMs.

The following theoretical part of this disclosure demonstrates how physical and chemical information, preferably optical-spectroscopic information, about the source probe and workpiece, can be obtained down to the atomic level. As the near-field zone surrounding the probe is characteristic for its dielectric/magnetic properties, and as the

EP 0 757 271 B1

probe volume can have atomic dimensions, it becomes clear that this method can provide specific information and/or images never before realizable.

By means of the present invention super-resolution e.g., 1 nanometer resolution may be achieved thereby enabling resolution of a workpiece close to the atomic level. Sundry workpiece properties, for example, complex susceptibility, can be measured with a very high spatial resolution down to atomic dimensions.

Preferred embodiments of the invention will now be described, by way of example only, with reference to the accompanying drawings in which:

Figures 1 & 2 show in overview a principle of interferometric measurement using an apparatus comprising multipole interactive coupling;

Figures 3 & 4 provide schematics for explaining the basic concepts about a preferred interferometric near-field apertureless microscope operating in a transmission and in a reflection mode, respectively;

Figure 5 illustrates measured optical dipole coupling vs. probe workpiece spacing, compared with theory; and

Figure 6 shows an alternative embodiment of the present invention.

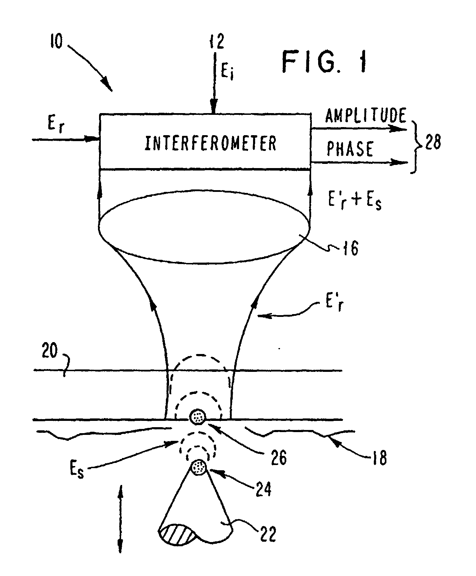

First will be described an interferometric near-field apparatus that is preferably employed in realization of a measuring/detecting method based on a multi-pole sensing. To this end, attention is directed to Fig. 1, which shows in overview such a generalized apparatus operating in a transmission mode.

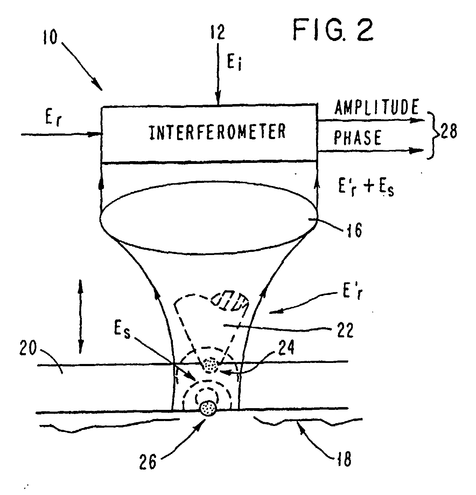

The Figure 1 apparatus 10 comprises a source 12 of electromagnetic radiation, preferably generating an incident electric field $E_i$, preferably in the optical spectrum, for example from UV to IR. The electric field $E_i$ is directed through a conventional interferometer 14 to a focusing element 16 which preferably comprises an aperture or an objective lens. The interferometer 14 may comprise e.g., a Michelson, Fabry-Perot or Twyman-Green apparatus. The driving electric field $E_i$ is now focused on a workpiece 18, in turn supported by a transparent substrate 20. (Note that in an alternative embodiment shown in Fig. 2 comprising a reflection mode, the driving electric field $E_i$ is focused directly on the workpiece 18).

Figure 1 also shows a probe tip sensor 22 preferably placed with respect to the workpiece 18 such that a distance between the probe tip 22 and at least a portion of the workpiece 18 surface is smaller than the source 12 radiation wavelength, or a multiple of it.

Note that a suitable probe may comprise a sharp metallic tip or an uncoated silicon and/or silicon nitride tip, or a tip coated with a conductive layer or a molecular system. The probe preferably comprises a high refractive index material. A near-field probe capability may be realized by e.g., a scanning tunneling microscope (STM), an atomic force microscope (AFM), an aperture or apertureless near-field optical microscope, a near-field acoustic microscope, a thermal microscope or a magnetic force microscope (MFM). A notion of "scanning" references the fact that probe and workpiece may be in relative motion. Reference may be made for example to U.S. Patent Nos. 5,319,977; 4,343,993; 5,003,815; 4,941753; 4,947,034; 4,747,698 and Appl. Phys. Lett. 65(13), 26 September 1994.

The Fig. 1 probe tip 22 is capable of re-radiating, in the form of a signal beam -SIG- $(E_s + E'_r)$, an incident radiation beam, the signal beam comprising carrier beam $E'_r$ combined with workpiece 18 property information encoded in the scattered field $E_s$ as the tip-feature dipole-dipole coupling. The signal beam -SIG- comprises a scattered electromagnetic field variation wave $E_s$, due preferably to the probe 22 vibrating (or moving relatively) in close proximity to the workpiece 18 surface. Note that the Fig.1 signal beam SIG illustrates what is summarized above as an electromagnetic wave packet representative of workpiece properties and comprising encoded wave information derivable from a multi-pole interactive coupling between probe and workpiece. In particular, the incident radiation $E_i$ can drive this action such that a dipole 24 dipole 26 coupling interaction is created between tip dipole 24 and workpiece dipole 26.

Figure 1 further shows that the aperture 16 helps for creating an interference signal -IS- based on the signal beam $(E_s + E'_r)$ and a reference beam $(E_r)$, and for directing the interference signal through the interferometer 14. The output signal 28 of the interferometer 14 can measure either the amplitude of $(E_s + E'_r)$ or its phase difference with a reference beam $E_r$. Note that a self-interference phenomena can be alternatively exploited and comprises spatially separating the beam 12 in several components having phase differences that are subsequently made to interfere.

As alluded to above, Figure 2 shows the Figure 1 apparatus, but modified for utilization in a reflection mode. One difference in the change of mode is that in the reflection mode, the substrate 20 does not need to be transparent: the apparatus of Fig. 2, otherwise, may be realized mutatis mutandis vis a vis the apparatus of Fig. 1.

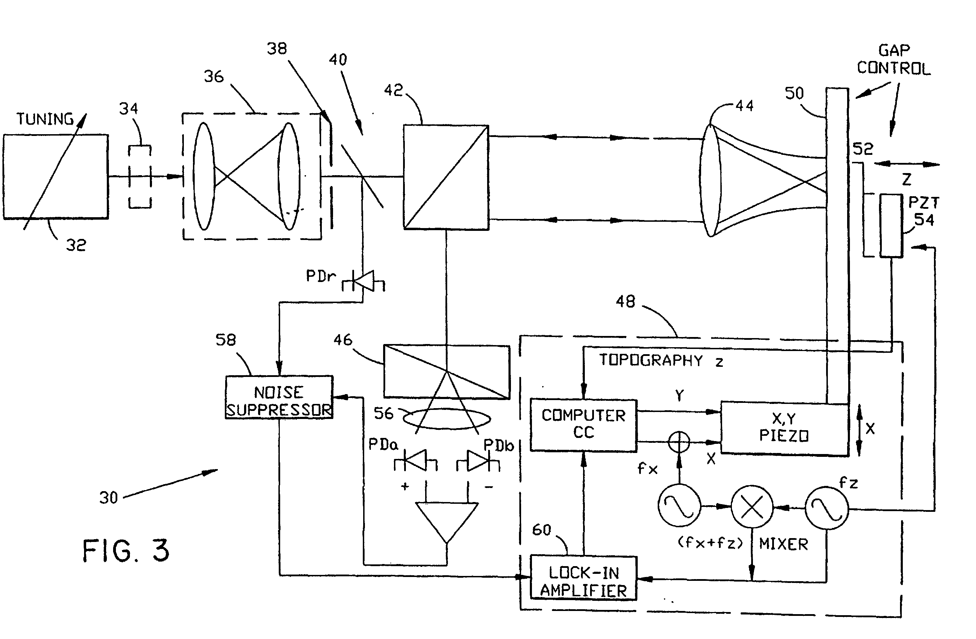

As illustrated in Figs 1 and 2, it should be noted that the incident light can be directed to a near-field probe either through the workpiece (transmission mode) or by reflection at its surface. In this latter case, particular attention has to be taken to discriminate the probe signal against spurious reflected light. For the sake of simplicity, the transmission case will first be described with reference to Fig. 3.

Attention is now directed to Fig. 3, which shows details of a preferred apparatus 30 for the realization of the present method and which are consistent with the generalized apparatus 10 as shown in Figure 1.

The Fig. 3 apparatus 30 includes an interferometer comprising the following components: an electromagnetic source, preferably a tunable wavelength (e.g., 400 nm < λ < 2500 nm) laser 32, an optional acousto-optic modulator 34 in order to prevent spurious back reflection of light generating laser noise; a special beam expander 36 for relative beam and measurement area movement; an aperture 38; a means for splitting an incoming lightwave into first and second lightwaves comprising a pellicule beam splitter 40; a polarising beam splitter 42; a transmission / collection optics (preferably a Nomarski Oil/dark-field objective) 44; a Wollaston prism 46; and, 3 photodetectors $PD_n$. Fig. 3 shows in association with the interferometer an optical probe sensor and a set of electronics 48 (enclosed by the broken-border box in Figure 3) that permits both topographic measurements and probe-workpiece distance feedback regulation with at least nanometer accuracy. Preferably using an AFM feedback, one can therefore image a surface topography while simultaneously recording a near-field optical image.

In the Fig. 3 illumination pathway, the laser beam of appropriate polarisation first passes through the beam steering unit 36 in order to expand the beam size in accordance with the objective aperture 44. The laser beam can be adjusted continuously within the beam steering unit 36 by preferably using a piezoelectric positioning system (e.g., x-y-z PZT tube) allowing small motion with nanometer accuracy. The beam steering is also controlled by an image-collection electronics 48 for relatively positioning the focused spots, a measurement area of the workpiece 50 and an optical probe sensor 52 while the scanned beam is traced back and forth.

The expanded laser light passes through the aperture 38 (preferably matching geometries of the transmission/collection optics 44) in which an angular discrimination of the incident radiation distribution preferably selects a total internal reflection illumination. Typically, the pellicle beam splitter 40 reflects about 10% of the incident radiation to a reference arm of the interferometer 30 to a detector, preferably a photodiode $PD_R$ and transmits about 90% of the incident radiation to the polarising beamsplitter 42.

The beam preferably is imaged to a plane wave that overfills the back aperture of the Nomarski objective 44 which focuses the plane wave to two diffraction limited spots in the workpiece 50. Because the aperture 38 blanks the illumination near the center of the beam, the exciting light wave propagates as an evanescent wave in the area illuminated in the workpiece.

When a probe sensor 52 that can operate various motions relative to the workpiece 50 at different frequencies (e.g., resonance frequency) with the help of a three-coordinate piezoelectric translator 54, is approached typically a few nanometers close to the workpiece 50, the probe 52 is capable of locally perturbing the wave impinging the smallest spatial asperity (e.g., the very end of a pointed STM or AFM tip) of the probe 52 resulting in a coupling mechanism between the probe dipole and feature dipole of the workpiece.

In terms of an electromagnetic field distribution, the scattered electric field variation due to the vibrating and scanning probe tip 52 in close proximity to the workpiece 50, may be measured by encoding it as a modulation in the phase of a second arm of the interferometer 30.

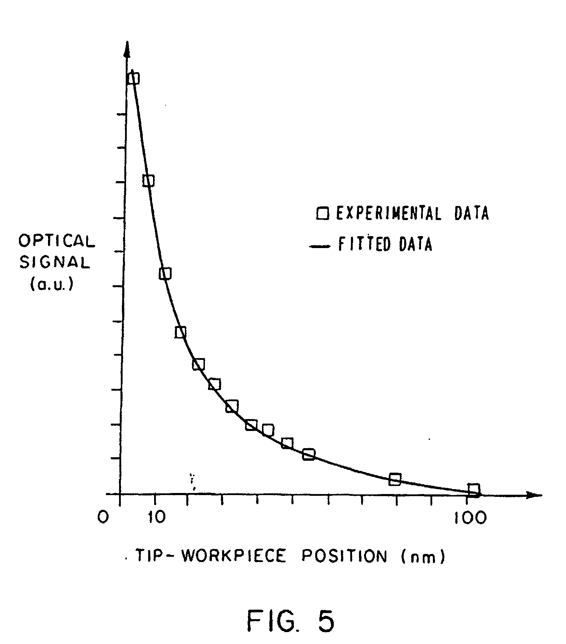

As it is shown in Figure 5, the optical signal strongly depends on the distance of the probe 52 dipole from the workpiece 50 dipole. The optical signal is collected by the objective 44 and reflected through the polarising beamsplitter 42 to a Wollaston prism 46 with its axis oriented relative to the Nomarski prism, in order to optimize the interference of the reflected electric fields from the two spots, and to measure the phase of the signal beam $(E_s + E'_r)$ which corresponds to the real part of the scattered wave $E_s$.

The light continues through an external lens 56 that focuses the light onto a photodiode $PD_A$ and $PD_B$. The imaginary part of the scattered wave $E_s$ can be detected by orienting the Wollaston prism 46 axis to be aligned with the Nomarski prism 44 axis, so as to separately detect the optical powers in the two spots (without mixing) in the differential photodiode $PD_{A\,B}$. This detection arrangement preferably operates at pre-selected frequencies ranging from 100 Hz to 100MHz.

The output signal of this differential detector preferably is sent to a noise suppressor 58 for further noise improvement, by combining the photocurrent from $PD_{A\,B}$ with that from the reference photodetector $PD_B$ which is fed a sample of the incident beam. The noise suppressor output preferably is sent to a lock-in amplifier input 60 in order to demodulate the resultant near-field AC signal carrying interesting information about workpiece properties. The output of 60 can be sent to a controller/computer -CC- device for generating an optical image that can be preferably compared simultaneously with an attractive mode AFM image generated by the independent feedback loop system 48.

The scattered field $E_s$ from the probe tip 52 end will in general be present on top of a spurious background of light scattered from the tip shank. The background signal can preferably be reduced in these ways. First, a confocal arrangement is employed for optical illumination and detection; this restricts the detection region to within 100 nm of the tip end. Second, if the tip is modulated in z at frequency $f_z$ by an amplitude which is approximately the tip radius, the backscattered light from the tip end will have a larger modulation on the workpiece as compared with light scattered from regions that are farther away as the tip is approached very close to the workpiece. Finally, the signals can be further enhanced at the spatial frequencies of interest (i.e., corresponding to the radius of the probe tip) by vibrating the workpiece laterally by approximately the tip radius at frequency $f_x$ and detecting the interferometer signal at the sum frequency $(f_x + f_z)$ as it is illustrated by the broken line in the Fig. 3 box 48.

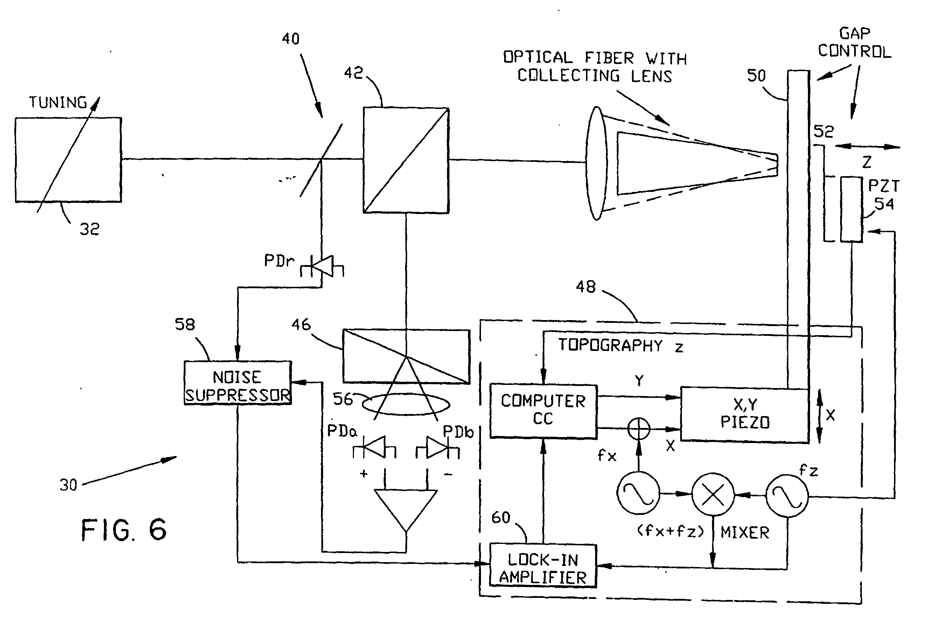

In an alternative embodiment, shown in Figure 6, the figure 3 elements 34, 36, 38 and 44 are replaced with a tapered metallized single-mode optical fiber element such as described by R.E. Betzig et al. in US patent No 5,272,330.

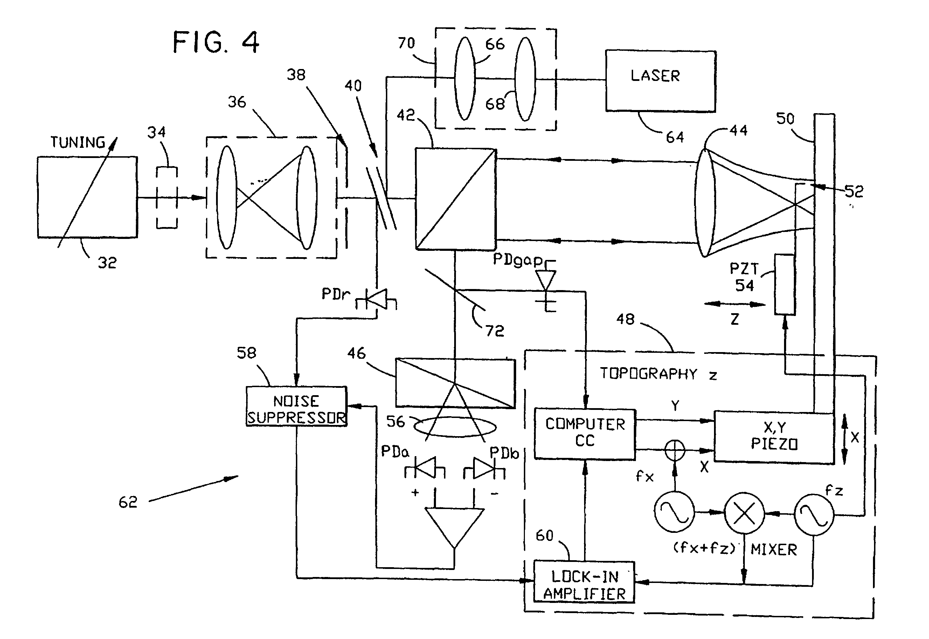

In a particular reflection configuration, the experimental arrangement as shown in Figure 4, apparatus 62, can incorporate, for example, directly through the objective 44, an optical feedback system for monitoring the tip-workpiece surface distance. The probe tip 52 can, for example, be resonantly vibrated with the aid of the piezo actuator 54 and the vibration amplitude can be detected with the help of a second laser beam 64 at a given wavelength different from that of laser source 32. The optical feedback preferably comprises an assembly of optical elements, for example, lenses 66 and 68 and dichroic filters 70, 72 in order to discriminate the two optical paths of different wavelengths for directing selected light onto the appropriate detectors $PD_n$. By adjusting the optics 66, 68 and 70 with respect to the probe tip 52, one can ensure that the light impinging the rear face of the probe 52 does not interfere with respect to the light impinging the very end of the probe tip 52. The optical detection of the back reflected light from the rear face of the probe 52 is then directed through the electronic set of box 48. The stable operation of the feedback system requires a proper choice of imaging parameters (e.g., scan rate...) and light distribution (e.g., focus and alignment of said second laser beam relative to said first beam) in order to minimize any laser noise affecting output signal quality.

A detailed description of preferred interferometric near field apparatus has thus been given with respect to Fig. 1 to 6. Such apparatus is employed to yield information about workpiece properties. Attention is now turned to a description of how this information can be abstracted in an intelligible manner, to thereby demonstrate the utility of the interferometric near-field apparatus.

Since the optical dipole interaction varies as $r^3$, a measured signal primarily derives from the tip end. One can therefore assume that the tip can be modeled as a sphere of radius a, and polarizability $\alpha_t$ and that the feature that is being imaged on the workpiece has a polarizability $\alpha_f$ and radius a (although the theory could easily be generalized for any arbitrary feature size). If the tip and workpiece are immersed in a driving electric field $E_i$ (caused by the incident radiation), and $\varepsilon$ is the dielectric permittivity of the surrounding medium, the following coupled equations for the induced dipole moments $P_t$ and $P_f$ in the tip and feature respectively (figure 1) can be written as:

$$P_t = \alpha_t \varepsilon \, (E_i + E_f) \qquad\qquad (1)$$

$$P_f = \alpha_f \varepsilon \, (E_i + E_t) \qquad\qquad (2)$$

Here, $E_t$ and $E_f$ are the corresponding near-fields generated by the dipole moments of tip and feature respectively. For the case where the spacing r between tip and feature is greater than the diameter 2a, the dipole approximation can be used and the following expressions for $E_t$ and $E_f$ can be written:

$$E_t = -\frac{P_t}{\varepsilon r^3} \qquad\qquad (3)$$

$$E_f = -\frac{P_f}{\varepsilon r^3} \qquad\qquad (4)$$

Substituting for $E_t$ and $E_f$ in equations (1) and (2) and solving for $P_t$ and $P_f$ it is found, after eliminating terms of order less than $r^3$ that:

$$P_t = \alpha_t \varepsilon \, (1 - \frac{\alpha_f}{r^3}) \, E_i \qquad\qquad (5)$$

$$P_f = \alpha_f \varepsilon \left(1 - \frac{\alpha_t}{r^3}\right) E_i \qquad (6)$$

Equations (5) and (6) show very clearly how the tip polarization couples with the feature polarization to generate a polarization modulation term

$$\Delta P = \frac{2\alpha_t \alpha_f \varepsilon E_i}{r^3}$$

It is this polarization modulation that produces a modulation in the scattered electric field $E_s$ as the tip - feature spacing r is modulated by vibrating the tip. As mentioned earlier, equations (5) and (6) are derived for the case where $r > 2a$ the linear dimension of the dipole (for a sphere, this linear dimension is comparable to its diameter). The corresponding equations for arbitrary r can be obtained using quasi-static theory simply by changing r to $(r^2 + a^2)^{1.5}$ in equations (5) and (6). More general expressions for the polarization modulation $\Delta P$ and the polarizability modulation $\Delta P$ are thus:

$$\Delta P = \frac{2\alpha_t \alpha_f \varepsilon E_i}{(r^2 + a^2)^{1.5}} \qquad (7)$$

$$\Delta \alpha = \frac{2\alpha_t \alpha_f}{(r^2 + a^2)^{1.5}} \qquad (8)$$

From equations (7) and (8), $\Delta P$ and $\Delta \alpha$ decreases rapidly from their maximum values as the tip-feature spacing is increased

$$\left(\overset{\sim}{\frac{1}{r^3}}\right)$$

As it will be described later, for situations where $ka < 1$, ($k = 2\pi n/\lambda$ being the optical propagation constant in a medium of refractive index n) the scattered electric field modulation $\Delta E_s$ is directly proportional to $\Delta \alpha$; one can therefore expect to see a strong decrease in $\Delta E_s$ as the tip-feature dipole-dipole coupling decreases with increasing $r$, As shown in Figure 4, experiments show a rapid variation over tip-workpiece spacings comparable to the tip radius. Furthermore, equations (7) and (8) show that $\Delta P$ and $\Delta \alpha$ are proportional to the product of the complex polarizability of the tip $\alpha_t$ and that of the feature $\alpha_f$. Consequently, the phase of the scattered field component $\Delta E_s$ can change drastically depending on the complex polarizability of the tip-end as previously observed (figure 5).
Now, the modulation $\Delta E_s$ of the scattered field $E_s$ caused by the polarizability modulation $\Delta \alpha$ can be calculated by applying the scattering matrix treatment used by van de Hulst (Light Scattering by Small Particles, Wiley, New-York 1957) to study light scattering from small particles. For an incident field $E_i$, the spherically scattered wave has electric field $E_s$ at a distance d in the far field given by

$$E_s = \frac{E_i}{ikd}(S) \; ; \; \Delta E_s = \frac{E_i}{ikd}(\Delta S) \qquad (9)$$

where the relevant scattering matrix component S (which has both real and imaginary components) can be written in terms of the polarizability $\alpha$:

$$S = ik^3 \alpha + \frac{2}{3}k^6 \alpha^2 \; ; \; \Delta S = ik^3 \Delta \alpha + \frac{2}{3} K^6 (\Delta \alpha)^2 \qquad (10)$$

and for a simple sphere of radius a, and complex refractive index m (relative to the surrounding medium)

$$\alpha = a^3 \frac{(m^2 - 1)}{(m^2 + 2)} \qquad (11)$$

Note that imaginary terms of order $k^5$ and higher order terms in the expansion for S have been omitted as we are dealing with scattering from very small particles (i.e., $k\alpha \ll 1$).

As just shown, the reflected wave from the back surface of the workpiece 50 is a concentric spherical wave of amplitude

$$E'_r = \left(\frac{E_i}{5}\right)(\omega_0) \frac{n}{dNA}, \text{ where } \omega_0 = \frac{\lambda}{\pi NA}$$

is the optical spot radius and NA is the numerical aperture of the objective lens. The expected phase difference $\Delta\phi$ between reference and signal beams is then $E_s/E_r$ or $\Delta\phi = 5k^3\alpha NA^2/8\pi$. The reflected wave is phase advanced by $\pi/2$ with respect to the scattered wave. Thus from equations (9) and (10), the imaginary component of S will give rise to a scattered field $E_{so}$ that is $\pi/2$ phase delayed with respect to $E'_r$ generating an overall phase shift, and the real component of S will give rise to a small scattered field $E_{se}$ that is $\pi$ out of phase with respect to $E'_r$ generating an overall extinction.

Considering first the case where $\alpha$ is purely real (i.e., m is real (silicon) or m is imaginary (gold)). The z-vibrating probe tip produces a modulation $\Delta S, \Delta E_{so}$ and $\Delta E_{se}$ respectively. $\Delta E_{se}$ interferes destructively with $E'_r$ to produce a fractional extinction

$$\Delta \frac{p_e}{p}$$

of the reflected power in the spherical wave $E'_r$. Using equation (9) and the expression for $E'_r$ it becomes:

$$\Delta \frac{p_e}{p} = 2\Delta \frac{E_{se}}{E_r} = 5\frac{NA^2}{n^2} Re [\Delta S] \qquad (12)$$

From the second term in equation (10) Re [S] (and Re [$\Delta$S]) vary as $(ka)^6$ and

$$\Delta \frac{p_e}{p}$$

will yield a negligibly small signal as the probe size decreases substantially below 50 nm. This term is in fact the fractional power scattered by the particle - i.e., what is typically detected in NSOM's.

By contrast, in an interferometric system $\Delta E_{s\phi}$ gives rise to a phase shift

$$\Delta\phi = \Delta \frac{E_s\phi}{E'_r}$$

in the reflected beam. This phase change $\Delta\phi$ produces a fractional power change

$$\Delta \frac{p_\phi}{p}$$

of $2\Delta\phi$ at the photodiode (due to the differential phase detection system).

$$\frac{\Delta p_\phi}{p} = 2 \frac{\Delta E_{s\phi}}{E'_r} = 5 \frac{NA^2}{n^2} Im[\Delta s] \qquad (13)$$

Therefore from equation (10), this fractional power change varies only as *(ka)*[3]. It is this dependence that gives reasonable S/N ratios at sub-molecular resolution in the present method and eventually, the possibility to achieve atomic resolution.

The ultimate resolution that may be achieved with the Fig.3 apparatus can be estimated using some simple considerations. Taking a silicon or metal tip (i.e. $m^{21}$) of radius a and polarisability $\alpha$,

$$\Delta\phi \approx \frac{5}{2}k^3 a^3 NA^2$$

For a coherent, shot noise limited phase detection system with 1 mW laser power, it can be shown that

$$\Delta\phi_{min} \approx 10^{-8} rad/\sqrt{Hz}$$

This would suggest that for He-Ne laser light ($\lambda$ = 633nm) with NA=0.85, a $\approx$1.7 *angstroms*, i.e., the resolution should reach the atomic level.

Now consider the general case where m is complex, $\alpha$ is complex. Returning to equation (10) and neglecting the second term, (as we are only concerned with resolving features substantially below 50 nm), S will have both a real and imaginary part that produce scattered fields $E_s$ that vary as *(ka)*[3]. Note that whereas in a dark-field measurement (like typical NSOM's), one will again be measuring scattered fractional powers that vary as *(ka)*[6], in SIAM, the imaginary part of $\alpha$ will produce a fractional power change that varies as *(ka)*[3] as it is evident from equation (12); these power changes can be detected by orienting the Wollaston prism axis to be aligned with the Nomarski prism axis, so as to separately detect the optical powers in the two spots (without mixing) in the differential photodiode. Other work on light scattering from plasmon resonances in spheres and more recently from STM tips are based on dark-field detection of the scattered optical power - i.e. *(ka)*[6] - signal dependence - and as before run into severe S/N problems at resolutions below 50 nm. However, the use of an *interferometric system,* as reported herein, demonstrates the ability to achieve the ultimate S/N and resolution.

Combining equations (12) and (13) with equations (8) and (9) and noting that the polarizability is related to the susceptibility

$$\chi \ by \ \alpha = \frac{\chi}{4\pi} \left(\frac{4}{3}\pi a^3\right)$$

equations (12) and (13) can be written in terms of the susceptibilities $\chi_t$ and $\chi_f$ of tip and feature respectively:

$$\Delta = \frac{P_e}{P} = \frac{10}{9} (ka)^3 \frac{NA^2}{n^2} Im[\chi_t \chi_f] \tag{14}$$

$$\Delta \frac{P_\phi}{P} = \frac{10}{9} (ka)^3 \frac{NA^2}{n^2} Re[\chi_t \chi_f] \tag{15}$$

Therefore, both the *real* and *imaginary* parts of the susceptibility of a feature can be determined - in principle down to the atomic scale - with two simultaneous measurements; the tip susceptibility being measured independently using a known reference surface as the workpiece.

Note, in conclusion, that the disclosure corresponding to equations (1-15) can be developed, mutatis mutandis, for a case wherein an external driving field comprises a magnetic field and induces magnetic dipole-dipole coupling, and for a case wherein an external driving electromagnetic field comprises both appreciable electrical and magnetic field components for inducing electromagnetic dipole-dipole coupling.

**Claims**

1.　An apparatus for providing near-field measurements of a workpiece, said apparatus comprising:

　　　a source (12,32) of electromagnetic radiation for generating an incident wave;
　　　means (16,36,42,44) for directing at least a portion of the incident wave to the workpiece;

a probe tip (24,52) acting as an antenna for receiving the incident wave and re-radiating a signal wave comprising a scattered electric field;

means (42,44) for creating an interference signal based on the signal wave and a reference wave; and

a detector (46, $PD_a$, $PD_b$) for interrogating at least one of the phase and amplitude (28) of the interference signal, **characterised in that** the apparatus further comprises:

means for positioning at least one of the probe tip and the workpiece in such close proximity as to develop a multi-pole coupling interaction whereby the scattered electric field strength of the signal wave is increased.

2. An apparatus according to claim 1, wherein the incident wave is generated by a tunable source from UV to IR for driving a multi-pole coupling between the workpiece and the probe tip.

3. An apparatus according to claim 1, wherein the incident wave is generated at a fixed wavelength.

4. An apparatus according to claim 1, wherein the incident wave comprises an evanescent wave.

5. An apparatus according to claim 1, wherein the incident wave comprises a standing wave.

6. An apparatus according to claim 1, wherein the incident wave comprises a propagating wave.

7. An apparatus according to claim 1, wherein the incident wave is generated by a coherent electromagnetic source.

8. An apparatus according to any preceding claim, comprising a focusing element for directing at least one portion of the incident wave to the workpiece.

9. An apparatus according to claim 8, wherein the focusing element comprises a high numerical aperture lens for a total internal reflection illumination of the workpiece.

10. An apparatus according any preceding claim, wherein the probe tip is formed of a high refractive index material.

11. An apparatus according to any preceding claim, wherein the probe tip comprises a spherical particle.

12. An apparatus according to any preceding claim, wherein the probe tip comprises a pointed tip.

13. An apparatus according to any preceding claim, comprising a Nomarski objective for creating the interference signal.

14. An apparatus according to any preceding claim, wherein at least a portion of the incident wave functions as the reference wave.

15. An apparatus according to any of claims 1 to 12, comprising a Michelson type interferometer for creating the interference signal.

16. An apparatus according to any preceding claim, wherein the detector comprises a differential photodiode assembly.

17. An apparatus according to claim 16, wherein the detector is operable at pre-selected frequencies ranging from 100 Hz to 100 MHz.

18. An apparatus according to any preceding claim, further comprising means for positioning at least one of the probe tip and the workpiece in close proximity such that the distance between the probe tip and the workpiece can create a multi-pole coupling interaction.

19. An apparatus according to claim 18, wherein the means for positioning comprises at least one piezoelectric positioner.

20. An apparatus according to claim 19, comprising a scanning probe microscope electronic feedback system for controlling the piezoelectric positioner.

21. An apparatus according to claim 18, wherein the distance between the probe tip and the workpiece is smaller than the incident wavelength.

22. An apparatus according to any of claims 1 to 7 or claims 10 to 21, comprising an optical fiber for directing the incident wave to the workpiece.

23. An apparatus according to claim 1, comprising means for operating the apparatus in a transmission mode by using a workpiece transparent to the incident wave, or using a transparent substrate to support the workpiece.

24. An apparatus according to claim 8, comprising means for operating the apparatus in a reflection mode by positioning the probe tip on the same side as the focusing element with respect to the workpiece.

25. An apparatus according to any preceding claim, comprising means for generating a time variable multi-pole interactive coupling by modulating at least one of the wavelength of the electromagnetic wave packet, the relative positioning of probe and workpiece, and using an external applied electromagnetic field to the interaction region.

26. A method for detecting the presence of a workpiece, the method comprising the steps of:

    generating an electromagnetic wave;
    directing at least a portion of the electromagnetic wave to the workpiece;
    sampling an electromagnetic wave packet representative of workpiece properties and comprising encoded wave information, the electromagnetic wave packet comprising a scattered electric field in consequence of the electromagnetic wave incident on the workpiece;
    decoding said electromagnetic wave packet by interrogating at least one of its phase and amplitude information using an interference reference wave; and
    using said decoding information as a means for detecting the presence of said workpiece, **characterised in that** the encoded wave information is derived from a multi-pole interactive coupling between a probe and the workpiece, whereby the scattered electric field strength of the electromagnetic wave packet is increased.

27. A method according to claim 26, further comprising assembling a map of the workpiece surface from data obtained from steps of sampling and decoding for developing an image representative of the workpiece.

28. A method according to claim 27, wherein developing the image includes a scanning operation comprising multiple sampling steps.

29. A method for deriving physical properties of a workpiece, the method comprising the steps of:

    generating an electromagnetic wave;
    directing at least a portion of the electromagnetic wave to the workpiece;
    sampling an electromagnetic wave packet representative of workpiece properties and comprising encoded wave information, the electromagnetic wave packet comprising a scattered electric field in consequence of the electromagnetic wave incident on the workpiece;
    decoding said electromagnetic wave packet by interrogating at least one of its phase and amplitude information using an interference reference wave; and
    correlating this information to referent physical-chemical properties of the workpiece; **characterised in that** the encoded wave information is derived from a multi-pole interactive coupling between a probe and the workpiece, whereby the scattered electric field strength of the electromagnetic wave packet is increased.

30. A method according to claim 26 or claim 29, wherein the step of sampling comprises creating an interference effect between an incoming electromagnetic wave generated by an external source and a scattered electromagnetic wave generated by a probe tip.

31. A method according to claim 30, wherein the sampling comprises dipole coupling of two externally driven dipoles including respectively the probe tip and workpiece dipoles.

32. A method according to claim 31, wherein the sampling comprises a predominantly magnetic dipole coupling.

33. A method according to claim 31, wherein the sampling comprises a predominantly electric dipole coupling.

**34.** A method according to claim 26 or claim 29, wherein the encoded wave information comprises a scattered local evanescent or propagating or standing electromagnetic field.

**35.** A method according to claim 29, wherein the step of decoding comprises correlating the phase information to the polarization of the workpiece.

**36.** A method according to claim 35, comprising the step of correlating the polarization to the susceptibility of the workpiece.

**37.** A method according to claim 36, comprising correlating the susceptibility of the workpiece to the dielectric constant of the workpiece.

**38.** A method according to claim 36, comprising correlating the susceptibility of the workpiece to its magnetic properties.

**39.** A method according to claim 29, wherein the step of decoding comprises correlating the amplitude information to the workpiece absorption.

**40.** A method according to claim 26 or claim 29, comprising generating a time-variable multi-pole interactive coupling by modulating at least one of the wavelength of the electromagnetic wave packet, the relative positioning of probe and workpiece, and external applied electromagnetic field to the interaction region.

**Patentansprüche**

**1.** Vorrichtung zum Bereitstellen von Nahfeldmessungen eines Werkstücks, wobei die Vorrichtung Folgendes umfasst:

eine elektromagnetische Strahlungsquelle (12, 32) zum Erzeugen einer vorlaufenden Welle;

Mittel (16, 36, 42, 44) zum Lenken mindestens eines Teils der vorlaufenden Welle auf das Werkstück;

eine Sondenspitze (24, 52), die als Antenne zum Empfangen der vorlaufenden Welle und zum Zurücksenden einer Signalwelle dient, welche ein gestreutes elektrisches Feld umfasst;

Mittel (42, 44) zum Erzeugen eines Interferenzsignals auf der Basis der Signalwelle und einer Referenzwelle; und

einen Detektor (46, $Pd_a$, $PD_b$) zum Abfragen mindestens einer der Komponenten des Interferenzsignals, der Phase oder der Amplitude (28), **dadurch gekennzeichnet, dass** die Vorrichtung ferner Folgendes umfasst:

Mittel zum Positionieren mindestens der Sondenspitze bzw. des Werkstücks so nahe beieinander, dass eine Mehrpol- Kopplungswechselwirkung entsteht, wodurch die elektrische Streufeldstärke der Signalwelle erhöht wird.

**2.** Vorrichtung nach Anspruch 1, bei der die vorlaufende Welle mittels einer im Bereich von UV bis IR durchstimmbaren Quelle zum Erzeugen einer Mehrpol-Kopplung zwischen dem Werkstück und der Sondenspitze erzeugt wird.

**3.** Vorrichtung nach Anspruch 1, bei der die vorlaufende Welle bei einer festen Wellenlänge erzeugt wird.

**4.** Vorrichtung nach Anspruch 1, bei der die vorlaufende Welle eine gedämpfte Welle umfasst.

**5.** Vorrichtung nach Anspruch 1, bei der die vorlaufende Welle eine stehende Welle umfasst.

**6.** Vorrichtung nach Anspruch 1, bei der die vorlaufende Welle eine sich ausbreitende Welle umfasst.

**7.** Vorrichtung nach Anspruch 1, bei der die vorlaufende Welle durch eine kohärente elektromagnetische Quelle erzeugt wird.

**8.** Vorrichtung nach einem der vorangehenden Ansprüche, welche eine Fokussierelement zum Lenken mindestens eines Teils der vorlaufenden Welle auf das Werkstück umfasst.

**9.** Vorrichtung nach Anspruch 8, bei der das Fokussierelement ein Objektiv mit einer hohen numerischen Apertur zur Beleuchtung des Werkstücks durch innere Totalreflexion umfasst.

**10.** Vorrichtung nach einem der vorangehenden Ansprüche, bei der die Sondenspitze aus einem Material mit hohem Brechungsindex gebildet ist.

**11.** Vorrichtung nach einem der vorangehenden Ansprüche, bei der die Sondenspitze ein kugelförmiges Teil umfasst.

**12.** Vorrichtung nach einem der vorangehenden Ansprüche, bei der die Sondenspitze eine punktförmige Spitze umfasst.

**13.** Vorrichtung nach einem der vorangehenden Ansprüche, welche ein Nomarski-Objektiv zum Erzeugen des Interferenzsignals umfasst.

**14.** Vorrichtung nach einem der vorangehenden Ansprüche, bei der mindestens ein Teil der vorlaufenden Welle als Referenzwelle fungiert.

**15.** Vorrichtung nach einem der Ansprüche 1 bis 12, die ein Interferometer vom Michelson-Typ zum Erzeugen des Interferenzsignals umfasst.

**16.** Vorrichtung nach einem der vorangehenden Ansprüche, bei der der Detektor eine differenzielle Fotodiodenanordnung umfasst.

**17.** Vorrichtung nach Anspruch 16, bei der der Detektor bei zuvor ausgewählten Frequenzen im Bereich zwischen 100 Hz und 100 MHZ arbeiten kann.

**18.** Vorrichtung nach einem der vorangehenden Ansprüche, die ferner Mittel zum Positionieren mindestens der Sondenspitze bzw. des Werkstücks so nahe beieinander umfasst, dass der Abstand zwischen der Sondenspitze und dem Werkstück eine Mehrpol-Kopplungswechselwirkung erzeugen kann.

**19.** Vorrichtung nach Anspruch 18, bei der die Mittel zum Positionieren mindestens ein piezoelektrisches Positionierelement umfassen.

**20.** Vorrichtung nach Anspruch 19, das ein elektronisches Rückkopplungssystem eines Rastersondenmikroskops zum Steuern des piezoelektrischen Positionierelements umfasst.

**21.** Vorrichtung nach Anspruch 18, bei der Abstand zwischen der Sondenspitze und dem Werkstück kleiner als die Wellenlänge der vorlaufenden Welle ist.

**22.** Vorrichtung nach einem der Ansprüche 1 bis 7 oder der Ansprüche 10 bis 21, das einen Lichtwellenleiter zum Lenken der vorlaufenden Welle auf das Werkstück umfasst.

**23.** Vorrichtung nach Anspruch 1, die Mittel zum Betreiben der Vorrichtung in einem Transmissionsmodus durch Verwenden eines für die vorlaufende Welle durchsichtigen Werkstücks oder durch Verwenden eines durchlässigen Substrats zum Haltern des Werkstücks umfasst.

**24.** Vorrichtung nach Anspruch 8, das Mittel zum Betreiben der Vorrichtung in einem Reflexionsmodus durch Positionieren der Sondenspitze auf derselben Seite des Werkstücks wie das Fokussierelement umfasst.

**25.** Vorrichtung nach einem der vorangehenden Ansprüche, die Mittel zum Erzeugen einer zeitlich veränderlichen Mehrpol- Wechselwirkungskopplung durch Veränderung von mindestens einer der Wellenlängen des Pakets elektromagnetischer Wellen, der relativen Positionierung von Sonde und Werkstück sowie durch Verwendung eines externen elektromagnetischen Feldes, das auf den Wechselwirkungsbereich einwirkt, umfasst.

**26.** Verfahren zum Erkennen der Anwesenheit eines Werkstücks, wobei das Verfahren die folgenden Schritte umfasst:

Erzeugen einer elektromagnetischen Welle;

Lenken mindestens eines Teils der elektromagnetischen Welle auf das Werkstück;

Abtasten eines Pakets elektromagnetischer Wellen, das die Werkstückeigenschaften repräsentiert und codierte Welleninformationen umfasst, wobei das Paket elektromagnetischer Wellen ein elektrisches Streufeld als Folge der auf das Werkstück vorlaufenden elektromagnetischen Welle umfasst;

Decodieren des Pakets elektromagnetischer Wellen durch Abfragen mindestens einer seiner Komponenten, seiner Phasen- bzw. Amplitudeninformationen, unter Verwendung einer Interferenzreferenzwelle; und

Verwenden der decodierten Informationen als Mittel zum Erkennen der Anwesenheit des Werkstücks, **dadurch gekennzeichnet, dass** die codierten Welleninformationen von einer Mehrpol-Wechselwirkungskopplung zwischen einer Sonde und dem Werkstück abgeleitet werden, wodurch die elektrische Streufeldstärke des elektromagnetischen Wellenpakets erhöht wird.

27. Verfahren nach Anspruch 26, das ferner das Erstellen eines Abbilds der Werkstückoberfläche aus den durch die Schritte des Abtastens und Decodierens erhaltenen Daten umfasst, um ein für das Werkstück repräsentatives Bild zu entwickeln.

28. Verfahren nach Anspruch 27, bei dem das Entwickeln des Bildes einen mehrere Abtastschritte umfassenden Abtastvorgang enthält.

29. Verfahren zum Ableiten der physikalischen Eigenschaften eines Werkstücks, wobei das Verfahren die folgenden Schritte umfasst:

Erzeugen einer elektromagnetischen Welle;

Lenken mindestens eines Teils der elektromagnetischen Welle auf das Werkstück;

Abtasten eines Pakets elektromagnetischer Wellen, das die Werkstückeigenschaften repräsentiert und codierte Welleninformationen umfasst, wobei das Paket elektromagnetischer Wellen ein elektrisches Streufeld als Folge der auf das Werkstück vorlaufenden elektromagnetischen Welle umfasst;

Decodieren des Pakets elektromagnetischer Wellen durch Abfragen mindestens einer seiner Komponenten, seiner Phasen- bzw. Amplitudeninformationen, unter Verwendung einer Interferenzreferenzwelle; und

Zuordnen dieser Informationen zu entsprechenden physikalisch-chemischen Eigenschaften des Werkstücks; **dadurch gekennzeichnet, dass** die codierten Welleninformationen von einer Mehrpol- Wechselwirkungskopplung zwischen einer Sonde und dem Werkstück abgeleitet werden, wodurch die elektrische Streufeldstärke des elektromagnetischen Wellenpakets erhöht wird.

30. Verfahren nach Anspruch 26 oder Anspruch 29, bei dem der Schritt des Abtastens das Erzeugen eines Interferenzeffektes zwischen einer durch eine äußere Quelle erzeugten eintreffenden elektromagnetischen Welle und einer durch eine Sondenspitze erzeugten elektromagnetischen Streuwelle umfasst.

31. Verfahren nach Anspruch 30, bei dem das Abtasten eine Dipolkopplung zweier von außen angeregter Dipole einschließlich des Sondenspitzendipols bzw. des Werkstückdipols umfasst.

32. Verfahren nach Anspruch 31, bei dem das Abtasten eine überwiegend magnetische Dipolkopplung umfasst.

33. Verfahren nach Anspruch 31, bei das Abtasten eine überwiegend elektrische Dipolkopplung umfasst.

34. Verfahren nach Anspruch 26 oder Anspruch 29, bei dem die codierten Welleninformationen ein gestreutes lokales gedämpftes oder ein sich ausbreitendes oder ein stehendes elektromagnetisches Feld umfassen.

35. Verfahren nach Anspruch 29, bei dem der Schritt des Decodierens das Zuordnen der Phaseninformationen zur Polarisation des Werkstücks umfasst.

**36.** Verfahren nach Anspruch 35, das den Schritt Zuordnen der Polarisation zur Suszeptibilität des Werkstücks umfasst.

**37.** Verfahren nach Anspruch 36, das das Zuordnen der Suszeptibilität des Werkstücks zur Dielektrizitätskonstanten des Werkstücks umfasst.

**38.** Verfahren nach Anspruch 36, das das Zuordnen der Suszeptibilität des Werkstücks zu seinen magnetischen Eigenschaften umfasst.

**39.** Verfahren nach Anspruch 29, bei dem der Schritt des Decodierens das Zuordnen der Amplitudeninformationen zur Absorption des Werkstücks umfasst.

**40.** Verfahren nach Anspruch 26 oder Anspruch 29, welches das Erzeugen einer zeitlich veränderlichen Mehrpol-Wechselwirkungskopplung durch Veränderung von mindestens einer der Wellenlängen des Pakets elektromagnetischer Wellen, der relativen Positionierung von Sonde und Werkstück sowie durch Verwendung eines externen elektromagnetischen Feldes, das auf den Wechselwirkungsbereich einwirkt, umfasst.

**Revendications**

**1.** Dispositif destiné à réaliser des mesures en champ proche d'une pièce d'ouvrage, ledit dispositif comprenant :

une source (12, 32) de rayonnement électromagnétique en vue de générer une onde incidente,
un moyen (16, 36, 42, 44) destiné à diriger au moins une partie de l'onde incidente vers la pièce d'ouvrage,
un embout de sonde (24, 52) agissant en tant qu'antenne en vue de recevoir l'onde incidente et re-rayonner une onde de signal, comprenant un champ électrique diffusé,
un moyen (42, 44) destiné à créer un signal d'interférence sur la base de l'onde de signal d'une onde de référence, et
un détecteur (46, $PD_a$, $PD_b$) destiné à interroger au moins l'une parmi la phase et l'amplitude (28) du signal d'interférence, **caractérisé en ce que** le dispositif comprend en outre :

un moyen destiné à positionner au moins l'un de l'embout de sonde et de la pièce d'ouvrage dans une telle proximité immédiate de façon à développer une interaction de couplage à pôles multiples d'où il résulte que l'intensité de champ électrique diffusé de l'onde de signal est augmentée.

**2.** Dispositif selon la revendication 1, dans lequel l'onde incidente est générée par une source accordable depuis l'ultraviolet jusqu'à l'infrarouge, en vue de générer un couplage à pôles multiples entre la pièce d'ouvrage et l'embout de sonde.

**3.** Dispositif selon la revendication 1, dans lequel l'onde incidente est générée à une longueur d'onde fixe.

**4.** Dispositif selon la revendication 1, dans lequel l'onde incidente comprend une onde évanescente.

**5.** Dispositif selon la revendication 1, dans lequel l'onde incidente comprend une onde stationnaire.

**6.** Dispositif selon la revendication 1, dans lequel l'onde incidente comprend une onde de propagation.

**7.** Dispositif selon la revendication 1, dans lequel l'onde incidente est générée par une source électromagnétique cohérente.

**8.** Dispositif selon l'une quelconque des revendications précédentes, comprenant un élément de focalisation destiné à diriger au moins une partie de l'onde incidente vers la pièce d'ouvrage.

**9.** Dispositif selon la revendication 8, dans lequel l'élément de focalisation comprend une lentille à ouverture numérique élevée en vue d'une illumination par réflexion interne totale de la pièce d'ouvrage.

**10.** Dispositif selon l'une quelconque des revendications précédentes, dans lequel l'embout de sonde est formé d'un matériau à indice de réfraction élevé.

**11.** Dispositif selon l'une quelconque des revendications précédentes, dans lequel l'embout de sonde comprend un élément sphérique.

**12.** Dispositif selon l'une quelconque des revendications précédentes, dans lequel l'embout de sonde comprend un embout pointu:

**13.** Dispositif selon l'une quelconque des revendications précédentes, comprenant un objectif de Nomarski destiné à créer le signal d'interférence.

**14.** Dispositif selon l'une quelconque des revendications précédentes, dans lequel au moins une partie de l'onde incidente fonctionne en tant qu'onde de référence.

**15.** Dispositif selon l'une quelconque des revendications 1 à 12, comprenant un interféromètre de type Michelson destiné à créer le signal d'interférence.

**16.** Dispositif selon l'une quelconque des revendications précédentes, dans lequel le détecteur comprend un ensemble de photodiode différentielle.

**17.** Dispositif selon la revendication 16, dans lequel le détecteur peut être mis en oeuvre à des fréquences présélectionnées allant de 100 Hz à 100 Mhz.

**18.** Dispositif selon l'une quelconque des revendications précédentes, comprenant en outre un moyen destiné à positionner au moins l'un de l'embout de sonde et de la pièce d'ouvrage à proximité immédiate de sorte que la distance entre l'embout de sonde et la pièce d'ouvrage peut créer une interaction de couplage à pôles multiples.

**19.** Dispositif selon la revendication 18, dans lequel le moyen en vue du positionnement comprend au moins un dispositif de positionnement piézoélectrique.

**20.** Dispositif selon la revendication 19, comprenant un système de contre-réaction électronique à microscope à sonde à balayage destiné à commander le dispositif de positionnement piézoélectrique.

**21.** Dispositif selon la revendication 18, dans lequel la distance entre l'embout de sonde et la pièce d'ouvrage est plus petite que la longueur d'onde incidente.

**22.** Dispositif selon l'une quelconque des revendications 1 à 7 ou des revendications 10 à 21, comprenant une fibre optique destinée à diriger l'onde incidente vers la pièce d'ouvrage.

**23.** Dispositif selon la revendication 1, comprenant un moyen destiné à mettre en oeuvre le dispositif dans un mode de transmission en utilisant une pièce d'ouvrage transparente à l'onde incidente, ou en utilisant un substrat transparent afin de supporter la pièce d'ouvrage.

**24.** Dispositif selon la revendication 8, comprenant un moyen destiné à mettre en oeuvre le dispositif dans un mode de réflexion en positionnant l'embout de sonde du même côté que l'élément de focalisation par rapport à la pièce d'ouvrage.

**25.** Dispositif selon l'une quelconque des revendications précédentes, comprenant un moyen destiné à générer un couplage interactif à pôles multiples variable dans le temps en modulant au moins l'un de la longueur d'onde du paquet d'ondes électromagnétiques, du positionnement relatif de la sonde et la pièce d'ouvrage, et en utilisant un champ électromagnétique appliqué externe à la région d'interaction.

**26.** Procédé destiné à détecter la présence d'une pièce d'ouvrage, le procédé comprenant les étapes consistant à:

générer une onde électromagnétique,
diriger au moins une partie de l'onde électromagnétique vers la pièce d'ouvrage,
échantillonner un paquet d'ondes électromagnétiques représentatif des propriétés de la pièce d'ouvrage et comprenant des informations d'ondes codées, le paquet d'ondes électromagnétiques comprenant un champ électrique diffusé en conséquence de l'onde électromagnétique incidente sur la pièce d'ouvrage,
décoder ledit paquet d'ondes électromagnétiques en interrogeant au moins l'une de ses informations de phase et d'amplitude en utilisant une onde de référence d'interférence, et
utiliser lesdites informations de décodage en tant que moyen destiné à détecter la présence de ladite pièce d'ouvrage, **caractérisé en ce que** les informations d'ondes codées sont obtenues à partir d'un couplage interactif à pôles multiples entre une sonde et la pièce d'ouvrage, d'où il résulte que l'intensité du champ électrique diffusé du paquet d'ondes électromagnétiques est augmentée.

27. Procédé selon la revendication 26, comprenant en outre l'assemblage d'une mappe de la surface de pièce d'ouvrage à partir de données obtenues à partir des étapes d'échantillonnage et de décodage en vue de développer une image représentative de la pièce d'ouvrage.

28. Procédé selon la revendication 27, dans lequel le développement de l'image comprend une opération de balayage comprenant de multiples étapes d'échantillonnage.

29. Procédé destiné à obtenir les propriétés physiques d'une pièce d'ouvrage, le procédé comprenant les étapes consistant à :

   générer une onde électromagnétique,
   diriger au moins une partie de l'onde électromagnétique vers la pièce d'ouvrage,
   échantillonner un paquet d'ondes électromagnétiques représentatif des propriétés de pièce d'ouvrage et comprenant des informations d'ondes codées, le paquet d'ondes électromagnétiques comprenant un champ électrique diffusé en conséquence de l'onde électromagnétique incidente sur la pièce d'ouvrage,
   décoder ledit paquet d'ondes électromagnétiques en interrogeant au moins l'une de ses informations de phase et d'amplitude en utilisant une onde de référence d'interférence, et
   corréler ces informations aux propriétés physico-chimiques de référence de la pièce d'ouvrage, **caractérisé en ce que** les informations d'ondes codées sont obtenues à partir d'un couplage interactif à pôles multiples entre une sonde et la pièce d'ouvrage, d'où il résulte que l'intensité du champ électrique diffusé du paquet d'ondes électromagnétiques est augmentée.

30. Procédé selon la revendication 26 ou la revendication 29, dans lequel l'étape d'échantillonnage comprend la création d'un effet d'interférence entre une onde électromagnétique entrante générée par une source externe et une onde électromagnétique diffusée par un embout de sonde.

31. Procédé selon la revendication 30, dans lequel l'échantillonnage comprend un couplage de dipôles de deux dipôles attaqués de façon externe comprenant respectivement les dipôles d'embout de sonde et de pièce d'ouvrage.

32. Procédé selon la revendication 31, dans lequel l'échantillonnage comprend un couplage de dipôles magnétique d'une manière prédominante.

33. Procédé selon la revendication 31, dans lequel l'échantillonnage comprend un couplage de dipôles électrique d'une manière prédominante.

34. Procédé selon la revendication 26 ou la revendication 29, dans lequel les informations d'ondes codées comprennent un champ électromagnétique évanescent ou de propagation ou stationnaire local diffusé.

35. Procédé selon la revendication 29, dans lequel l'étape de décodage comprend la corrélation des informations de phase à la polarisation de la pièce d'ouvrage.

36. Procédé selon la revendication 35, comprenant l'étape de corrélation de la polarisation à la susceptibilité de la pièce d'ouvrage.

37. Procédé selon la revendication 36, comprenant la corrélation de la susceptibilité de la pièce d'ouvrage à la constante de diélectrique de la pièce d'ouvrage.

38. Procédé selon la revendication 36, comprenant la corrélation de la susceptibilité de la pièce d'ouvrage à ses propriétés magnétiques.

39. Procédé selon la revendication 29, dans lequel l'étape de décodage comprend la corrélation des informations d'amplitude à l'absorption de pièce d'ouvrage.

40. Procédé selon la revendication 26 ou la revendication 29, comprenant la génération d'un couplage interactif à pôles multiples variable dans le temps en modulant au moins l'un de la longueur d'onde du paquet d'ondes électromagnétiques, du positionnement relatif de la sonde et de la pièce d'ouvrage, et du champ électromagnétique appliqué de façon externe à la région d'interaction.

FIG. 1

FIG. 2

FIG. 3

FIG. 4

EP 0 757 271 B1

FIG. 5

FIG. 6

EP 0 757 271 B1